# EUROPEAN PATENT SPECIFICATION

(11) **EP 1 544 054 B1**
(45) Date of publication and mention of the grant of the patent: **01.05.2013**
(21) Application number: 04028946.4
(22) Date of filing: 07.12.2004
(51) Int. Cl.: B60R 21/233, B60R 21/2338

(54) **Vehicle comprising an occupant's leg protection system with a knee airbag**
Fahrzeug mit einem Insassenbeinschutzsystem und einem Kniegassack
Véhicule avec un système de protection des jambes d'un occupant et un coussin gonflable de protection des genoux

(30) Priority: 19.12.2003 JP 2003423069
(43) Date of publication of application: 22.06.2005
(73) Proprietor: TAKATA CORPORATION, Minato-ku, Tokyo 106-8510 (JP)
(72) Inventor: Kumagai, Masayoshi c/o Takata Corporation, Tokyo 106-8510 (JP); Abe, Kazuhiro c/o Takata Corporation, Tokyo 106-8510 (JP); Kawauchimaru, Masatoshi c/o Takata Corporation, Tokyo 106-8510 (JP)
(74) Representative: Vossius & Partner

(56) References cited:
- EP-A- 1 310 408
- US-A1- 2002 171 232

## Description

The present invention relates to a vehicle comprising a leg protection system.

There is an occupant's leg protection system for protecting the lower legs of an occupant from striking against the interior panel ahead of a seat to receive a large load in the event of a head-on collision of a highspeed mobile unit such as a car, which includes a knee-airbag that is inflated toward the front of the occupant's legs and an inflator (gas generator) for inflating the knee-airbag.

It is described in JP-A-11-321539 (Patent Document 1) to provide an occupant's leg protection system in which a knee airbag is inflated in the region of an instrument panel facing the knees of an occupant to receive the occupant's knees with the inflated knee airbag, thereby restraining the forward movement of the body of the occupant. The documents US 2002/0171232 A1 and EP 1310408 A2 disclose each a vehicle according to the preamble to the preamble of claim 1.

Receiving occupant's knees with an inflated knee airbag in such a way prevents the forward movement of the body of an occupant greatly effectively.

The region of an instrument panel at a height that faces occupant's knees generally has a glove box (a glove compartment) etc. and as such, it is sometimes difficult to dispose an occupant's leg protection system in the region.

Accordingly, there is proposed a structure in which an occupant's leg protection system is disposed below that region (at a height lower than the region that faces occupant's knees) and a knee airbag is inflated from below upward to deploy toward the height that faces the occupant's knees.

However, with such a structure, the knee airbag is inflated from below upward across a relatively long distance from a height lower than the occupant's knees to a height that faces the knees and as such, is likely to have a large volume and, in order to inflate the high-volume knee airbag quickly, a high-output inflator must be used.

Accordingly, it is an object of the present invention to provide a knee airbag that is inflated quickly from below upward without having to use a high-output inflator and an occupant's leg protection system including the knee airbag.

A vehicle according to the present invention is defined by claim 1. It includes an knee airbag constructed to be inflated toward the front of the legs of a vehicle occupant and adopted to be inflated from below upward. In an inflated state the thickness of the knee airbag except the lateral sides is larger at the upper part than at the middle part which is a lower part in the vertical direction of the knee airbag.

The knee airbag includes tethers connecting a base fabric of the knee airbag adjacent to an occupant and an opposite base fabric together provided vertically in multistage in the knee airbag, wherein the tethers extend continuously laterally, vent spaces are formed between the respective lateral ends of the tethers and the lateral edges of the knee airbag, and the uppermost tether is located in the vicinity of the boundary between the upper part of the knee airbag and the middle part of the vertical direction of the knee airbag. The thickness C of the uppermost tether is smaller than half of the length A of a knee-airbag base fabric from the connected portion between the uppermost tether and the base fabric adjacent to an occupant around the upper rim of the knee airbag to the connected portion between the uppermost tether and the opposite base fabric (C < 1/2A), and smaller than half of the length B of a knee-airbag base fabric that surrounds the vent space from the connected portion between the lateral end of the uppermost tether and the base fabric adjacent to an occupant around the side of the knee airbag to the connected portion between the opposite lateral end of the uppermost tether and the opposite base fabric (C < 1/2B).

In the knee airbag and the occupant's leg protection system according to the present invention, the thickness of the inflated knee airbag is larger at the upper part than at the middle part which is a lower part in the vertical direction of the knee airbag, in other words, the thickness of the knee airbag is smaller at the middle part of the vertical direction of the knee-airbag than the upper part of the knee airbag. Accordingly, at inflation of the knee airbag, the middle part of the vertical direction of the knee airbag is inflated quickly from below upward and as such the upper part of the knee-airbag is deployed quickly toward the front of the occupant's knees without having to use a high-output inflator.

The upper part of the inflated knee airbag is sufficiently thick across the width.

According to the invention, tethers that connect the base fabric of the knee airbag adjacent to an occupant and the opposite base fabric together are provided vertically in multistage in the knee airbag, wherein the tethers extend continuously laterally, vent spaces are formed between the lateral ends of the tethers and the lateral edges of the knee airbag; the uppermost tether is located in the vicinity of the boundary between the upper part of the knee airbag and the middle part of the vertical direction of the knee airbag, wherein the thickness C of the uppermost tether is smaller than half of the length A of the knee airbag base fabric from the connected portion between the uppermost tether and the base fabric adjacent to the occupant around the upper rim of the knee airbag to the connected portion between the uppermost tether and the opposite base fabric (C < 1/2A), and smaller than half of the length B of the knee-airbag base fabric that surrounds the vent space from the connected portion between the lateral end of the uppermost tether and the base end adjacent to the occupant around the side of the knee airbag to the connected portion between the opposite lateral end of the uppermost tether and the opposite base fabric (C < 1/2B).

With such a structure, the upper part of the knee-airbag in an inflated state can be sufficiently thick while the middle part which is a lower part in the vertical direction of the knee airbag is thinner than the upper part of the knee airbag.

An embodiment of the present invention will be described hereinbelow with reference to the drawings.
Fig. 1 is a cross-sectional view of the vicinity ahead of a vehicle seat showing the inflated state of a knee-airbag according to an embodiment of the present invention;
Fig. 2 is a front view of the knee airbag in an inflated state;
Fig. 3 is a cross-sectional view taken along line III-III of Fig. 2;
Figs. 4(a) and 4(b) are cross-sectional views taken along line IVA-IVA and line IVB-IVB of Fig. 2, respectively; and
Fig. 5 is a cross-sectional view taken along line V-V of Fig. 1.
In the following description, a lateral direction means a direction along the width of a vehicle.

An occupant's leg protection system 14 is mounted to an interior panel 10 ahead of a seat 12.

The occupant's leg protection system 14 includes a container-like retainer 16 that is open in the front (a surface adjacent to an occupant), a knee airbag 18 connected to the retainer 16, and an inflator (gas generator) 20 for inflating the knee airbag 18.

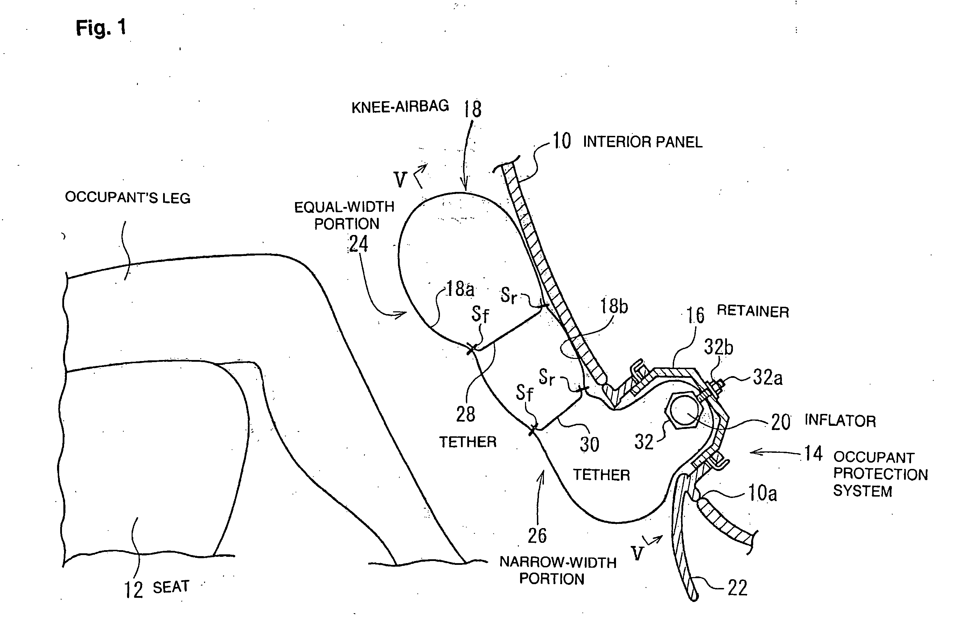

The retainer 16 is disposed in an opening 10a of the interior panel 10. The knee airbag 18 is usually accommodated in an folded state in the retainer 16. A lid 22 is attached to the front surface of the retainer 16 such that it covers the folded knee airbag 18. The lid 22 is usually disposed so as to be substantially flush with the interior panel 10 and, when the knee airbag 18 is inflated, the lid 22 is open to the front surface of the interior panel 10 with the lower end as fulcrum, as shown in Fig. 1.

As shown in Fig. 1, the opening 10a is provided lower than the seating surface of the seat 12. The knee airbag 18 is inflated from below upward along the front surface(a surface adjacent to the occupant) of the interior panel 10 through the opening 10a.

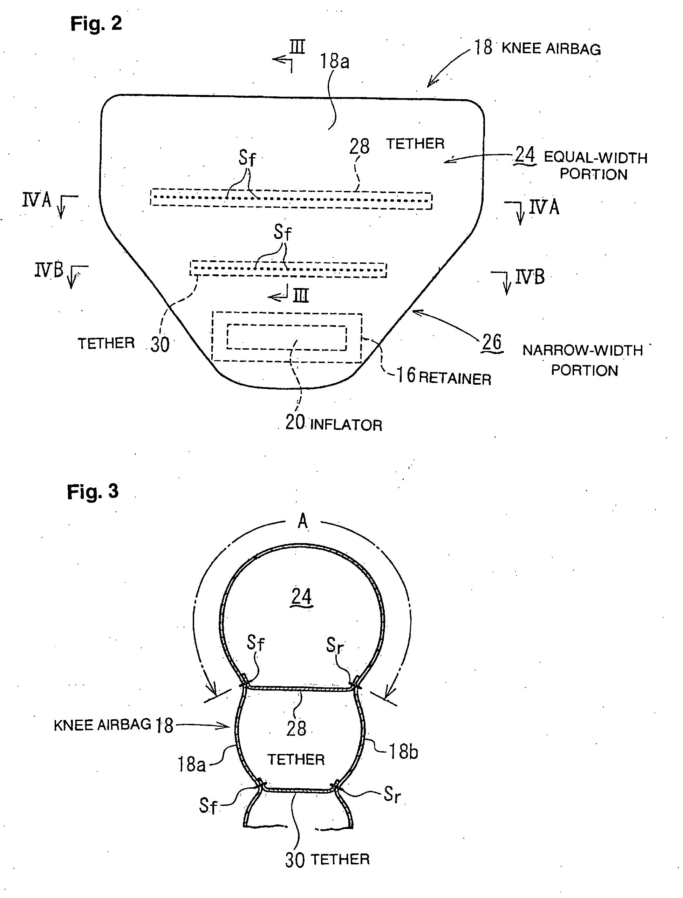

Referring to Fig. 2, according to the embodiment, the upper part of the knee airbag 18 constitutes an equal-width portion 24 of which the lateral width is substantially equal across a predetermined vertical width. The part of the knee airbag 18 lower than the equal-width portion 24 constitutes a narrow-width portion 26 of which the lateral width is smaller at the lower part. The lower end of the narrow-width portion 26 is connected to the retainer 16.

The equal-width portion 24 is disposed such that it is located above the seating surface of the seat 12 when the knee airbag 18 is inflated from below upward along the front surface of the interior panel 10 through the opening 10a. Therefore, when the knee airbag 18 is inflated toward the front of occupant's legs, the equal-width portion 24 faces the vicinity of the knees of the occupant seated in the seat 12.

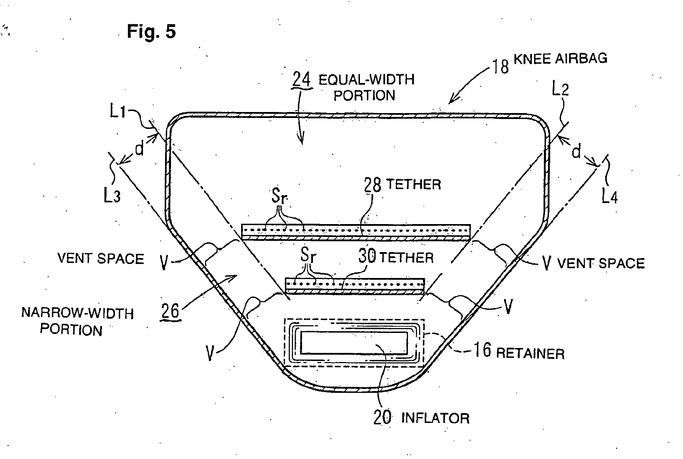

The lateral width of the equal-width portion 24 is preferably in the range from 500 mm to 600 mm. The lateral width of the front opening of the retainer 16 is preferably at most one-half, particularly from 40% to 50% of the width of the equal-width portion 24. As shown in Fig. 5, the narrow-width portion 26 preferably extends such that the lateral edges thereof connect the lateral edges of the equal-width portion 24 with the lateral lower corners of the front opening of the retainer 16, respectively.

The knee airbag 18 has tethers 28 and 30 that connect the front surface (a base fabric adjacent to the occupant) 18a of the knee airbag 18 and the rear surface (a base fabric adjacent to the interior panel 10) 18b in vertical multistage (two stages in this embodiment). Symbol Sf denotes seams that connect the tethers 28 and 30 with the front surface 18a; symbol Sr denotes seams that connect the tethers 28 and 30 with the rear surface 18b. The upper tether 28 is disposed in the vicinity of the boundary between the equal-width portion 24 and the narrow-width portion 26 (preferably, in the range of 0 mm to 70 mm above or below the boundary between the equal-width portion 24 and the narrow-width portion 26 and, more preferably, in the range of 0 mm to 30 mm above or below). The lower tether 30 is disposed at an intermediate position of the vertical direction of the narrow-width portion 26.

The tethers 28 and 30 extend in the lateral direction and each connects to the front surface 18a and the rear surface 18b across a predetermined lateral width. As shown in Fig. 5, the respective lateral ends of the tethers 28 and 30 are separated from the lateral edges of the knee airbag 18. Between the lateral ends of the tethers 28 and 30 and the lateral edges of the knee airbag 18, vent spaces V are formed, respectively.

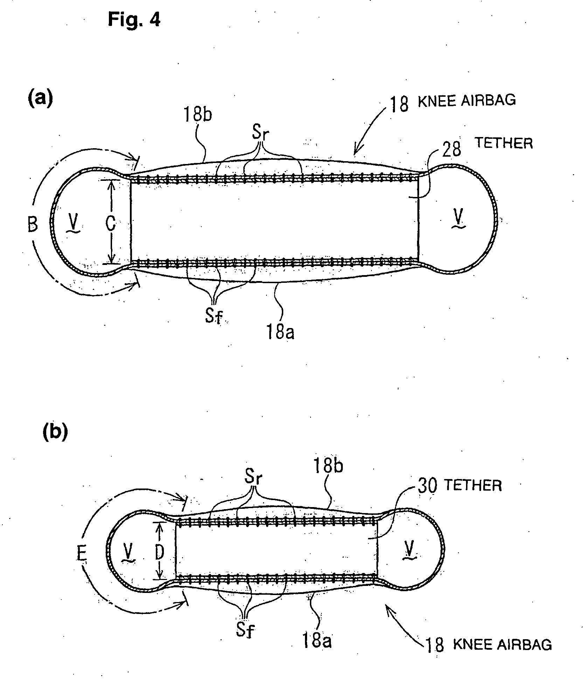

The length of the upper tether 28 (the length in the direction of connection between the front surface 18a and the rear surface 18b, the same applies to the following) forms the thickness C and (see Fig. 4(a)) is larger than that of the lower tether 30 (see Fig. 4(b)).

Accordingly, as shown in Fig. 3 and Figs. 4(a) and 4(b), the thickness of the inflated knee airbag 18 is larger at the upper part (equal-width portion 24) than at the middle part (narrow-width portion 26) of the vertical direction of the knee airbag 18. In other words, the thickness of the knee airbag 18 is smaller at the middle part of the vertical direction than at the upper part of the knee airbag 18 and the thickness of the upper part of the knee airbag 18 is substantially equal and sufficient at the greater part in the lateral center except the lateral sides of the knee airbag 18.

When the upper and lower tethers 28 and 30 are disposed in multistage to limit the thickness of the upper part and the middle part of the vertical direction of the knee airbag 18 during inflation, it is preferable to set the length C of the upper tether 28 in the range from 20 mm to 150 mm, more preferably, from 50 mm to 100 mm and the length D of the lower tether 30 in the range from 10 to 130 mm, more preferably, from 30 mm to 90 mm.

In that case, it is more preferable to set the length which forms the thickness C of the upper tether 28 smaller than half of the length A (see Fig. 3) of the base fabric of the knee airbag 18 from the connected portion (seam Sf) between the tether 28 and the knee-airbag front surface 18a around the upper rim of the knee airbag 18 to the connected portion (seam Sr) between the tether 28 and the knee-airbag rear surface 18b (C < 1/2A) and smaller than half of the length B (see Fig. 4(a)) of a knee-airbag base fabric which surrounds the vent space V on the each lateral sides of the upper tether 28 (from the seam Sf at the lateral end of the tether 28 around the side of the knee airbag 18 to the opposite seam Sr) (C < 1/2B).

Also, it is more preferable to set the length D of the lower tether 30 smaller than the length C of the tether 28 (C ≥ D) and set the length B of the knee-airbag base fabric larger than the length E of a knee-airbag base fabric which surrounds the vent space V on the each lateral sides of the lower tether 30 (from the seam Sf at the lateral end of the tether 30 around the side of the knee airbag 18 to the opposite seam Sr) (see Fig. 4(b)) (B ≥ E).

With such a structure, the upper part of the knee airbag in an inflated state can be sufficiently thick while the middle part of the vertical direction of the knee airbag is thinner than the upper part of the knee airbag.

The cross section of the flow channel of each vent space V is preferably in the range from 3,000 mm² to 7,850 mm², more preferably, from 4,500 mm² to 5,500 mm². In that case, the interval (the shortest distance) between the respective lateral ends of the tethers 28 and 30 and the lateral edges of the knee airbag 18 is preferably in the range from 80 mm to 130 mm, more preferably, from 90 mm to 120 mm.

As shown in Fig. 5, particularly, line L₁ that connects the left ends of the tethers 28 and 30 together and line L₂ that connects the right ends together are parallel to lines L₃ and L₄ that extend along the lateral edges of the narrow-width portion 26, respectively, and the distances d between the lines L1 and L3 and between the lines L2 and L4 are preferably in the range from 80 mm to 130 mm, more preferably, from 90 mm to 120 mm. With such a structure, gas from the inflator 20 flows quickly upward along the lateral edges of the narrow-width portion 26 through the vent spaces V.

In the invention, a diffuser for directing the gas flow from the inflator 20 laterally may be disposed in the knee airbag 18. With such a structure, the gas from the inflator 20 flows more efficiently along the lateral edges of the narrow-width portion 26.

The inflator 20 of this embodiment is shaped like a rod and disposed in the narrow-width portion 26 such that the longitudinal direction is the lateral direction. The inflator 20 is mounted to an inflator holder 32. The inflator holder 32 includes a base portion and a band portion which fixes the inflator 20 to the base portion (the reference numerals are omitted). Stud bolts 32a project from the base portion.

The stud bolts 32a are inserted into bolt insertion holes (the reference numerals are omitted) provided in the rear surface 18b at the lower end of the narrow-width portion 26 to project to the back of the knee airbag 18 (opposite to the occupant) and further inserted into bolt insertion holes (the reference numerals are omitted) provided in the retainer 16. Nuts 32b are fastened to the stud bolts 32a, so that the inflator holder 32 is fixed in the retainer 16 and the rear surface 18b at the lower end of the narrow-width portion 26 is retained between the inflator holder 32 and the retainer 16.

When a vehicle equipped with the occupant's leg protection system 14 with such a structure collides at the front, the inflator 20 emits a jet of gas and so the knee airbag 18 starts to be inflated by the gas from the inflator 20. The knee airbag 18 pushes the lid 22 open to be inflated toward the front of the interior panel 10 and is deployed upward along the interior panel 10. The equal-width portion 24 at the upper part of the inflated knee airbag 18 faces the vicinity of occupant's knees and receives them.

In the occupant's leg protection system 14, the thickness of the inflated knee airbag 18 is larger at the upper part (the equal-width portion 24) than at the middle part which is a lower part in the vertical direction (the narrow-width portion 26) of the knee airbag 18, or the thickness of the knee airbag 18 is smaller at the middle part of the vertical direction than at the upper part of the knee airbag 18. Accordingly, at inflation of the knee airbag 18, the middle part of the vertical direction of the knee airbag 18 is inflated quickly from below upward and as such, the upper part of the knee airbag 18 is deployed quickly toward the front of the occupant's knees without having to use a high-output inflator.

The upper part (the equal-width portion 24) of the inflated knee airbag 18 becomes substantially equal in thickness and sufficiently thick across the width. Accordingly, when the occupant's knees strike against the upper part of the knee airbag 18, the forward movement of the occupant's knees can be stopped sufficiently.

The knee airbag 18 according to the embodiment has a shape in which the lower narrow-width portion 26 is smaller in lateral width at the lower part, or an upward expanding shape, and the gas from the inflator 20 disposed at the lower end of the narrow-width portion 26 flows upward through the vent spaces V between the lateral ends of the upper and lower tethers 28 and 30 and the lateral edges of the narrow-width portion 26. Therefore, at the inflation of the knee airbag 18, the narrow-width portion 26 first is inflated while expanding upward and laterally, then the equal-width portion 24 above the narrow-width portion 26 is inflated to extend laterally so as to connect the inflated portions of the lateral sides of the narrow-width portion 26 together, and then the vicinity of the center of the knee airbag 18 is inflated.

The upper tether 28 is disposed in the vicinity of the boundary between the equal-width portion 24 and the narrow-width portion 26 and has a large lateral width. The equal-width portion 24 has a relatively small volume and so the equal-width portion 24 is inflated quickly.

Accordingly, the lateral sides and the upper equal-width portion 24 of the knee airbag 18 are inflated quickly, so that the knee airbag 18 is inflated laterally and upward quickly.

In this embodiment, the flow-channel cross-sectional area of the vent spaces V between the respective lateral ends of the tethers 28 and 30 and the lateral edges of the narrow-width portion 26 is in the range from 3,000 mm² to 7,850 mm². Accordingly, gas flows quickly upward in the vent spaces V. Thus, the knee airbag 18 is inflated extremely quickly.

## Claims

1. A vehicle comprising a leg protection system (14) which is mounted to an interior panel (10) ahead of a seat (12), the leg protection system (14) includes a container-like retainer (16) that is disposed in an opening (10a) of the interior panel (10) adjacent to an occupant, a knee airbag (18) connected to the retainer (16), and an inflator (20) for inflating the knee airbag (18),
the knee airbag (18) is constructed to be inflated in a vertical direction upwardly from the opening (10a) provided lower than the seating surface of the seat (12) along the front surface of the interior panel (10) in front of the legs of a vehicle occupant, **characterised in that** the knee airbag comprises:
an upper part (24) adapted to be located in the inflated state above the seating surface of the seat (12) in a vertical direction and having a first thickness ,
a lower part (26) adapted to be located in the inflated state below the upper part (24) in a vertical direction, with the lower end of the lower part (26) being connected to the retainer (16) and having a second thickness which is smaller than the first thickness, and
tethers (28, 30) connecting a base fabric (18a) of the knee airbag adjacent to the occupant and an opposite base fabric (18b) of the knee airbag together in vertical multistage in the knee airbag across a predetermined thickness, wherein
- the tethers extend continuously laterally,
- vent spaces (V) are formed between the respective lateral ends of the tethers and lateral edges of the knee airbag;
- the uppermost tether (28) is located between the upper part (24) of the knee airbag (18) and the lower part (26) of the knee airbag; and
- the thickness C of the uppermost tether (28) is
smaller than half of a length A of a knee-airbag base fabric from the connected portion between the uppermost tether and the base fabric (18a) adjacent to the occupant around the upper rim of the knee airbag (18) to the connected portion between the uppermost tether (28) and the opposite base fabric (18b) C < 1/2A, and
smaller than half of a length B of a knee-airbag base fabric that surrounds the vent space (V) from the connected portion between the lateral end of the uppermost tether (28) and the base fabric (18a) adjacent to the occupant around the side of the knee airbag to the connected portion between the opposite lateral end of the uppermost tether (28) and the opposite base fabric (18b) C < 1/2B.

2. The vehicle according to Claim 1, wherein the uppermost tether (28) is located at the boundary between the upper part (24) and the lower part (26) of the knee airbag.

3. The vehicle according to Claim 2, wherein the uppermost tether (28) is located in a range of 0 to 70 mm, preferably in a range of 0 to 30 mm above or below the boundary between the upper part (24) and the lower part (26) of the knee airbag.

4. The vehicle according to any one of claims 1 to 3, wherein the thickness D of the lower tether (30) is smaller than the thickness C of the uppermost tether (28) (C ≥ D).

## Patentansprüche

1. Fahrzeug mit einem Beinschutzsystem (14), das an einer Innenwand (10) vor einem Sitz (12) befestigt ist, wobei das Beinschutzsystem (14) eine behälterähnliche Halterung (16) aufweist, die in einer Öffnung (10a) der Innenwand (10) benachbart zum Fahrzeuginsassen angeordnet ist, einem mit der Halterung (16) verbundenen Knie-Airbag (18), und einem Gasgenerator (20) zum Aufblasen des Knie-Airbags (18),
wobei der Knie-Airbag (18) aufgebaut ist, um von der Öffnung (10a) aus, die unterhalb der Sitzfläche des Sitzes (12) vorgesehen ist, in einer Vertikalrichtung aufwärts entlang der Vorderseite der Innenwand (10) vor den Beinen eines Fahrzeuginsassen aufgeblasen zu werden,
**dadurch gekennzeichnet, dass** der Knie-Airbag aufweist:
einen oberen Teil (24), der sich im aufgeblasenen Zustand in Vertikalrichtung oberhalb der Sitzfläche des Sitzes (12) befindet und eine erste Dicke aufweist,
einen unteren Teil (26), der sich im aufgeblasenen Zustand in Vertikalrichtung unterhalb des oberen Teils (24) befindet, wobei das untere Ende des unteren Teils (26) mit der Halterung (16) verbunden ist und eine zweite Dicke aufweist, die kleiner als die erste Dicke ist, und
Haltegurte (28, 30), die ein neben dem Fahrzeuginsassen liegendes Grundgewebe (18a) des Knie-Airbags und ein gegenüberliegendes Grundgewebe (18b) des Knie-Airbags vertikal mehrstufig über eine vorgegebene Dicke verbinden, wobei
- die Haltegurte sich kontinuierlich seitlich erstrecken,
- Entlüftungsräume (V) jeweils zwischen seitlichen Enden der Haltegurte und seitlichen Rändern des Knie-Airbags ausgebildet sind;
- der oberste Haltegurt (28) zwischen dem oberen Teil (24) des Knie-Airbags (18) und dem unteren Teil (26) des Knie-Airbags angeordnet ist; und
- die Dicke C des obersten Haltegurts (28)
kleiner ist als die Hälfte einer Länge A des Grundgewebes des Knie-Airbags vom verbundenen Abschnitt zwischen dem obersten Haltegurt und dem neben dem Fahrzeuginsassen liegenden Grundgewebe (18a) aus um den oberen Rand des Knie-Airbags (18) herum bis zum verbundenen Abschnitt zwischen dem obersten Haltegurt (28) und dem gegenüberliegenden Grundgewebe (18b), C < 1/2A, und
kleiner ist als die Hälfte einer Länge B des Grundgewebes des Knie-Airbags, welche den Entlüftungsraum (V) vom verbundenen Abschnitt zwischen dem seitlichen Ende des obersten Haltegurts (28) und dem neben dem Fahrzeuginsassen liegenden Grundgewebe (18a) um die Seite des Knie-Airbags herum bis zum verbundenen Abschnitt zwischen dem gegenüberliegenden seitlichen Ende des obersten Haltegurts (28) und dem gegenüberliegenden Grundgewebe (18b) umgibt, C < 1/2B.

2. Fahrzeug nach Anspruch 1, wobei der oberste Haltegurt (28) an der Grenze zwischen dem oberen Teil (24) und dem unteren Teil (26) des Knie-Airbags angeordnet ist.

3. Fahrzeug nach Anspruch 2, wobei der oberste Haltegurt (28) im Bereich von 0 bis 70 mm, vorzugsweise im Bereich von 0 bis 30 mm oberhalb oder unterhalb der Grenze zwischen dem oberen Teil (24) und dem unteren Teil (26) des Knie-Airbags angeordnet ist.

4. Fahrzeug nach einem der Ansprüche 1 bis 3, wobei die Dicke D des unteren Haltegurts (30) kleiner als die Dicke C des obersten Haltegurts (28) ist (C ≥ D).

## Revendications

1. Véhicule, comprenant un système de protection des jambes (14) monté sur un panneau intérieur (10) devant un siège (12), le système de protection des jambes (14) comportant un support de fixation en forme de conteneur (16) disposé dans une ouverture (10a) du panneau intérieur (10) adjacente à un passager, un airbag de genoux (18) relié au support de fixation (16), et un générateur (20) destiné à gonfler l'airbag de genoux (18),
l'airbag de genoux (18) étant conçu pour être gonflé dans la direction verticale au-dessus de l'ouverture (10a) prévue au-dessous de la surface d'assise du siège (12) le long de la surface avant du panneau intérieur (10), en face des jambes d'un passager du véhicule,
**caractérisé en ce que** l'airbag de genoux comprend :
une partie supérieure (24) prévue pour être en état gonflé disposée au-dessus de la surface d'assise du siège (12) dans la direction verticale, et présentant une première épaisseur,
une partie inférieure (26) prévue pour être en état gonflé disposée au-dessous la partie supérieure (24) dans la direction verticale, l'extrémité inférieure de la partie inférieure (26) étant reliée au support de fixation (16) et présentant une deuxième épaisseur inférieure à la première épaisseur, et
des attaches (28, 30) raccordant un tissu de base (18a) de l'airbag de genoux adjacent au passager à un tissu de base opposé (18b) de l'airbag de genoux sur plusieurs étages verticaux dans l'airbag de genoux, sur une épaisseur définie,
- les attaches présentant une extension latérale continue,
- des espaces d'aération (V) étant formés entre les extrémités latérales respectives des attaches et les bords latéraux de l'airbag de genoux ;
- l'attache supérieure (28) étant disposée entre la partie supérieure (24) de l'airbag de genoux (18) et la partie inférieure (26) de l'airbag de genoux ; et
- l'épaisseur C de l'attache supérieure (28) étant inférieure à la moitié d'une longueur A d'un tissu de base d'airbag de genoux, de la partie raccordée entre l'attache supérieure et le tissu de base (18a) adjacent au passager autour du bord supérieur de l'airbag de genoux (18), à la partie raccordée entre l'attache supérieure (28) et le tissu de base opposé (18b), C < 1/2A, et
inférieure à la moitié d'une longueur B d'un tissu de base d'airbag de genoux qui entoure l'espace d'aération (V), de la partie raccordée entre l'extrémité latérale de l'attache supérieure (28) et le tissu de base (18a) adjacent au passager autour du côté de l'airbag de genoux, à la partie raccordée entre l'extrémité latérale opposée de l'attache supérieure (28) et le tissu de base opposé (18b), C < 1/2B.

2. Véhicule selon la revendication 1, où l'attache supérieure (28) est disposée à la limite entre la partie supérieure (24) et la partie inférieure (26) de l'airbag de genoux.

3. Véhicule selon la revendication 2, où l'attache supérieure (28) est disposée dans une plage de 0 à 70 mm, préférentiellement dans une plage de 0 à 30 mm au-dessus ou au-dessous de la limite entre la partie supérieure (24) et la partie inférieure (26) de l'airbag de genoux.

4. Véhicule selon l'une des revendications 1 à 3, où l'épaisseur D de l'attache inférieure (30) est inférieure à l'épaisseur C de l'attache supérieure (28) (C ≥ D).
